# EUROPEAN PATENT APPLICATION

(11) **EP 2 608 566 A2**
(43) Date of publication of application: **26.06.2013**
(21) Application number: 12196252.6
(22) Date of filing: 10.12.2012
(51) Int. Cl.: H04N 21/485, H04N 21/654, H04N 21/84

(54) **Client apparatus, system, and control method thereof.**

(30) Priority: 22.12.2011 KR 20110140619
(71) Applicant: Samsung Electronics Co., Ltd, Gyeonggi-do 443-742 (KR)
(72) Inventor: Lee, Dai-boong, Gyeonggi-do (KR)
(74) Representative: Brandon, Paul Laurence

(57) **Abstract**

A client apparatus, a system, and a control method thereof are provided. The control method includes: receiving a user command which selects contents; providing a user interface (UI) screen, which is used to select a watching environment information of the selected contents, according to the user command; and setting a watching environment according to the watching environment information selected through the UI screen.

## Description

### CROSS-REFERENCE TO RELATED APPLICATION(S)

This application claims priority under 35 U.S.C. § 119 from Korean Patent Application No. 10-2011-0140619, filed on December 22, 2011, in the Korean Intellectual Property Office, the disclosure of which is incorporated herein by reference in its entirety.

### BACKGROUND

### 1. Field

Embodiments generally relate to a client apparatus, a system, and a control method thereof. More particularly, embodiments relate to a client apparatus which can play contents, a system, and a control method thereof.

### 2. Description of the Related Art

A Video on Demand (VoD) service provides image information requested by a user in real time. VOD is also referred to as a customized image information service or a VoD search system.

Therefore, the VOD service is different from an existing public network broadcasting or a cable TV, which unilaterally receives a program. The VoD service is a bidirectional service by which a subscriber can set desired contents at a desired time according to a request of the subscriber. The VoD service may order image information by using a communication network and may provide a play function, a stop function, a pause function, a fast-forward function, a fast rewind function, and a replay function in an arbitrary position. These functions are similar to a general video device.

If a user selects VoD contents that the user wants to watch in an existing VoD service, the VoD contents are serviced in a download or streaming format. According to characteristics of the VOD contents, in the download or streaming format, the user is not supplied with any information through which the user can watch the VoD contents in a high image quality or a high sound quality. In other words, audio/video (A/V) settings in a watching apparatus is empirically performed according to a user setting.

Accordingly, there is a problem in that most users watch VoD contents in an existing A/V setting format without taking into account characteristics of the VoD contents.

### SUMMARY

The exemplary embodiments provide a client apparatus which can set a watching environment according to a characteristic of each of the contents, a system, and a control method.

According to an aspect of the exemplary embodiments, there is provided a method of controlling a client apparatus which plays contents. The method may include: receiving a user command, which selects contents; providing a user interface (UI) screen, which selects a watching environment information of the selected contents, according to the user command; and setting a watching environment according to the watching environment information selected through the UI screen.

The providing the UI screen may include: providing the UI screen, which selects the watching environment information added to the contents, if the watching environment information is added to the selected contents.

The watching environment information added to the selected contents may be information provided from at least one of a contents producer, a contents service provider, and a contents player maker.

The watching environment information may be added to the selected contents in a metadata format or may be provided as data, separate from the contents.

The providing of the UI screen may include providing the UI screen, which is to select pre-set watching environment information, to the client apparatus.

The pre-set watching environment information may be at least one of pre-stored watching environment information, watching environment information requested from the external server or another server, and watching environment information provided through an internet search.

The pre-stored watching environment information may be information which is pre-set according to at least one of a type and a genre of contents.

According to another aspect of the exemplary embodiments, there is provided a client apparatus. The client apparatus may include: a UI unit which receives a user command, which selects contents; a controller which determines whether watching environment information has been added to the selected contents; and a UI processor which generates a UI screen, which selects a watching environment information of the selected contents. The controller may set a watching environment according to the watching environment information selected through the UI screen.

If the watching environment information has been added to the selected contents, the controller may provide the UI screen which selects the watching environment information added to the selected contents.

The watching environment information added to the selected contents may be information provided from at least one of a contents producer, a contents service provider, and a contents player maker.

The watching environment information added to the selected contents may be added to the selected contents in a metadata format or may be provided as data, separate from the contents.

If the watching environment information is not added to the contents, the controller may provide the UI screen, which selects pre-set watching environment information.

The pre-set watching environment information may be at least one of pre-stored watching environment information, watching environment information requested from an external server or another server, and watching environment information provided through an internet search.

The pre-stored watching environment information may be information which is pre-set according to at least one of a type and a genre of contents.

According to another aspect of the exemplary embodiments, there is provided a system. The system may include: a server which, if a request for providing contents selected by a user is received from a client apparatus, provides the contents selected according to the request, to the client apparatus; and the client apparatus provides a UI screen which selects a watching environment information of the selected contents, and if the server provides the watching environment information corresponding to the selected contents, the client apparatus provides the provided watching environment information to the UI screen, or if the server does not provide the watching environment information corresponding to the selected contents, the client apparatus provides pre-set watching environment information to the UI screen, and the client apparatus sets a watching environment according to the watching environment information selected through the UI screen.

The server may give priorities to information, which is provided from at least one of a contents producer, a contents service provider, and a control player maker, according to corresponding contents preferences of a plurality of users, and may provide the information according to which the given priorities.

According to a further aspect of the exemplary embodiments, there is provided a method of setting a contents play environment. The method may include: receiving a user command, which selects contents; determining whether an environment setting information has been added to the selected contents; and setting an audio video environment.

If the environment setting information has been added to the selected contents, the method may determine whether an added environment setting information has been selected.

If the added environment setting information has been selected, the method may set the audio video information according to the selected information.

If the added environment setting information has not been selected or the environment setting information has not been added to contents, the method may display a user interface (UI) screen with a pre-set environmental setting information, and determining whether the environment setting information has been selected.

If the environment setting information has been selected, the method may set the audio video environment according to the selected information.

If the environment setting information has not been selected, the method may set the audio video environment by maintaining the audio video environment.

### BRIEF DESCRIPTION OF THE DRAWINGS

The above and/or other aspects will be more apparent by describing certain exemplary embodiments with reference to the accompanying drawings, in which:

FIG. 1 is a view illustrating a schematic structure of a contents providing system according to an exemplary embodiment;

FIG. 2 is a block diagram illustrating a structure of a client apparatus according to an exemplary embodiment;

FIG. 3 is a block diagram illustrating a structure of a contents providing server according to an exemplary embodiment;

FIGS. 4A through 4D are views illustrating a user interface (UI) screen according to an exemplary embodiment;

FIGS. 5A through 5B are views illustrating UI screens according to various exemplary embodiments;

FIG. 6 is a flowchart illustrating a method of setting a contents playing environment according to an exemplary embodiment;

FIG. 7 is a flowchart illustrating a method of setting a contents playing environment according to another exemplary embodiment; and

FIG. 8 is a flowchart illustrating operation S740 of FIG. 7 in detail.

### DETAILED DESCRIPTION OF THE EXEMPLARY EMBODIMENTS

Exemplary embodiments are described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

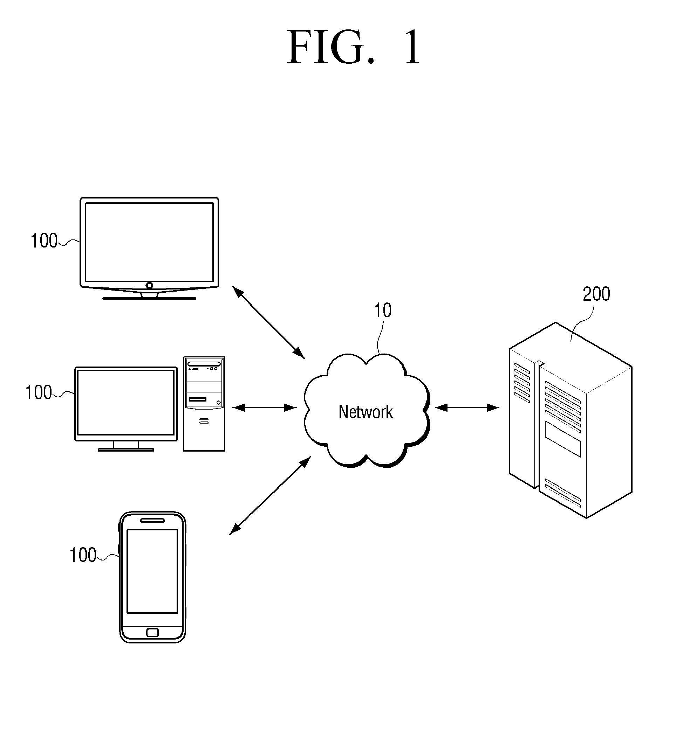

FIG. 1 is a view illustrating a schematic structure of a contents providing system 1000 according to an exemplary embodiment.

Referring to FIG. 1, the contents providing system includes a client apparatus 100 and a contents providing server 200. Here, the client apparatus 100 may be connected to the contents providing server 200 through a network 10.

The client apparatus 100 requests the contents providing server 200 through the network 10, in particular, a wireless network, to provide contents. Here, the contents may be pre-produced contents such as Video on Demand (VoD) contents, premium VoD contents, broadcast contents, Internet contents, local files, external contents connected to a Digital Living Network Alliance (DLNA) network, etc. However, embodiments are not limited thereto, and the contents may be film broadcast contents, real-time broadcast contents, etc.

Hereinafter, for convenience, the contents will be described as VoD contents.

Here, the client apparatus 100 may be realized as a television (TV), a set-top box, a portable phone, a personal computer (PC), a personal digital assistant (PDA), a tablet PC, etc., which can play VoD contents and may be realized to have a contents playing function. Alternatively, the client apparatus 100 may be realized to perform a function of signal-processing and displaying contents played from an additional contents player (not shown)

In particular, if the client apparatus 100 is realized as a TV, the client apparatus 100 may be realized as an Internet Protocol Television (IPTV). The IPTV refers to a bidirectional TV service, which is provided by using an ultrahigh speed internet network. The IPTV may connect a TV to the contents providing server 200 through a set-top box and the Internet network.

The contents providing server 200 may provide various types of multimedia contents, e.g., VoD, premium VoD, Internet contents, local files, external contents connected to a DLNA network, etc.

In particular, the contents providing server 200 may be realized as a server which provides VoD contents and may download VoD contents or may provide the VoD contents in a streaming format.

Therefore, the contents providing server 200 may build a database of various types of multimedia contents to store the various types of contents. However, the contents providing server 200 may communicate with an additional data providing server (not shown) to be provided with contents.

The contents providing server 200 may store watching environment information corresponding to the various types of contents. Here, the watching environment information may be provided from at least one of a contents producer, a contents service provider, and a contents player maker. Also, the watching environment information may be periodically or frequently updated according to a request of a provider.

The contents providing server 200 may also store selection preference information with respect to watching environment information of a plurality of users who have downloaded contents.

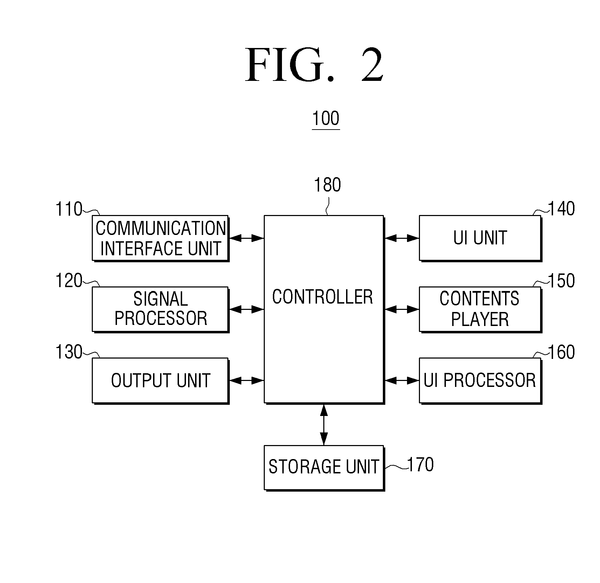

FIG. 2 is a block diagram illustrating a structure of a client apparatus 100 according to an exemplary embodiment.

A communication interface unit 110 receives broadcast contents through an antenna, a cable, etc., or receives contents from an external device or an external communication network.

In detail, the communication interface unit 110 may receive various types of contents through a network or air.

In particular, the communication interface unit 110 receives contents from the contents providing server 200 of FIG. 1. Here, the contents providing server 200 may provide Internet contents, premium VoD, local files, external contents connected to a DLNA network, etc.

The communication interface unit 110 receives watching environment information which is added to contents and then transmitted in a metadata format or is provided as data separate from contents.

In this case, the communication interface unit 110 may be realized in various forms. For example, if the client apparatus 100 is realized as a TV or a set-top box, the communication interface unit 110 may be realized as a tuner. In this case, the communication interface unit 110 may be realized as a first tuner which receives a broadcast signal and a second tuner which receives VoD contents. However, VoD contents may be received through a wireless network communication module, not through a tuner.

If the client apparatus 100 is realized as a portable terminal, i.e., a smart phone or a PDA, the communication interface unit 110 may be realized as a wireless communication module which supports a communication network. The wireless communication module may be a 3G network or a WiFi network.

A signal processor 120 signal-processes various types of signals received through the communication interface unit 110. Therefore, the signal processor 120 may include a signal processing element, i.e., a demodulator, a decoder, an analog-to-digital converter (ADC), a scaler, etc.

An output unit 130 outputs contents which have been signal-processed by the signal processor 120. Here, the output unit 130 may be realized to include a display (not shown) and a speaker (not shown). Here, the display may be realized as a cathode ray tube (CRT), a liquid crystal display (LCD), a thin film transistor liquid crystal display (TFT-LCD), a plasma display panel (PDP), a flexible display, a head mounted display (HMD), etc.

In particular, the output unit 130 may output various types of user interfaces (UIs) generated by an UI processor 106 under control of a controller 180.

A UI unit 140 receives a user signal.

Here, the UI unit 140 may be realized as various forms, according to a type of the client apparatus 100.

For example, if the client apparatus 100 is realized as a TV or a set-top box, the UI unit 140 may be realized as a remote control receiver. The remote control receiver receives a remote control signal.

The UI unit 140 may be realized as an input panel. The input panel includes a plurality of keys or a touch screen in which a display and a touch pad are layered.

If the UI unit 140 is realized as the touch screen, in which the display and the touch pad are layered, the UI unit 140 may be used as the output unit 120.

A contents player 150 plays contents received through the communication interface unit 110 or contents stored in a storage unit (not shown).

The UI processor 160 generates various types of UI elements, which are overlapped and displayed with an image output from the output unit 130. The UI processor 160 is under control of the controller 180. Here, the UI processor 160 may generate a 2-dimensional (2D) or 3-dimensional (3D) UI element.

In particular, if the watching environment information is added to the contents received through the communication interface unit 120, the UI processor 160 may generate various types of UI screens. The various types of UI screens are used to select corresponding information.

If the watching environment information is not added to the contents received through the communication interface unit 120, the UI processor 160 may generate a UI screen. The UI screen may include a selection menu for selecting preset watching environment information.

For example, the UI processor 160 may generate a UI screen, including a selection menu, which is used to select at least one of pre-stored watching environment information. The watching environment information is provided through requesting information from an external server, another server, or an internet search.

The UI processor 160 may manipulate input units, i.e., a manipulation panel or a remote controller, to select a function desired by the user. The user selects the function from menus, in order to generate a main menu, a sub menu, etc., in an On Screen Display (OSD) form on a display screen. These menus may include option items, which may be selected in the client apparatus 100, or items which adjust a function of the client apparatus 100.

The UI processor 160 may perform jobs a 2D/3D change, a transparency, a color, a size, form and position adjustments, a highlight, an animation effect, etc., of a UI element. As stated above, the UI processor 160 is under control of the controller 180.

A storage unit 170 is a storage medium, which stores various types of programs necessary for operating the client apparatus 100. The storage unit 170 may be realized as a memory, a hard disk drive (HDD), etc. For example, the storage unit 170 may store a program for performing an operation of the controller 180. The storage unit 170 may temporarily store data obtained by the performance of the operation of the controller 180 or may store various types of reference data.

The storage unit 170 may store at least one of watching environment information according to types and genres of contents, and watching environment information according to genders, ages, and regions of viewers. The storage unit 170 may store combinations of the above-described various types of watching environment information. Here, the types of contents may be divided into categories such as a movie, an animation, a drama, a news, a cultural program, an entertainment program, etc. The genres of the contents may be divided into categories such as action, melodrama, horror, detective, fantasy, thriller, comedy, etc.

For example, if the genre of the contents is action, the storage unit 170 may store screen information and sound information. If the type of the contents is a movie, and the genre of the contents is action, the storage unit 170 may store screen information and sound information. If the type of the contents is a movie, and the genre of the contents is melodrama, the storage unit 170 may storage screen information and sound information. Also, such information may be periodically updated.

The storage unit 170 may store watching environment information of contents which have been played in the client apparatus 100.

The storage unit 170 may store information about an internet address for the above-described internet search, a server address for a server search, etc.

The controller 180 controls an overall operation of the client apparatus 100.

In particular, the controller 180 may control the UI processor 160 to provide a UI screen. The UI screen is used to select watching environment information added to contents provided according to a selection of the user.

If watching environment information added to selected contents exists, the controller 180 may provide a UI screen to select the corresponding watching environment information. In this case, if a plurality of pieces of watching environment information are added to the contents, the controller 180 may provide a UI screen which is used to select one of the plurality of pieces of watching environment information. If one piece of watching environment information is added to the contents, the controller 180 may provide a UI screen. The UI screen provides an inquiry to the user regarding a selection of the corresponding watching environment information. For example, if added watching environment information is a plurality of pieces of information respectively provided from a contents producer, a contents service provider, and a contents player maker, the controller 180 may generate and display a UI screen which is used to select the corresponding information. Thus, the user selects desired information.

The controller 180 may provide a UI screen to select pre-set watching environment information. Thus, the user selects desired information.

For example, if watching environment information is not added to the selected contents, the controller 180 may provide a UI screen. The UI screen which is used toselects pre-set watching environment information. Thus, the user selects desired information.

For example, the controller 180 may provide a UI screen to select at least one of pre-stored watching environment information, watching environment information provided through requesting information from an external server, another server, or an Internet search.

The controller 180 may store watching environment information of contents which have been played in a set. Thus, if the same types of contents are played, the controller 180 may recommend corresponding information to the user.

The controller 180 may store watching environment information according to types and genres of contents which have been played previously. The controller 180 may also give priorities to the watching environment information according to the number of selected times, in order to recommend corresponding watching environment information to the user when playing the same type or genre of contents.

If watching environment information is selected, the controller 180 may set a contents play environment with respect to the corresponding watching environment information. Here, the watching environment information may include screen information and sound information.

For example, the screen information may include information about a screen mode, backlight, brightness, sharpness, a black tone, a position and a size of subtitles, etc.

The sound information may include equalizer information (a balance, an amplification level of each frequency band, etc.), SRS TruSurround HD, volume, sharpness, black tone information, etc.

Although not shown, the client apparatus 100 may further include a Digital Rights Management (DRM) canceller (not shown).

The DRM canceller cancels a DRM of contents received through the communication interface unit 110. In detail, the DRM canceller may cancel the DRM of the received contents by using a DRM cancelling program.

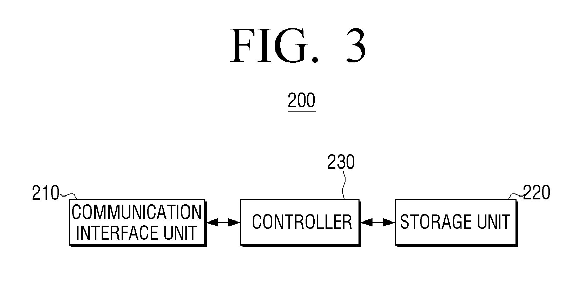

FIG. 3 is a block diagram illustrating a structure of a contents providing server 200 according to an exemplary embodiment.

Referring to FIG. 3, the contents providing server 200 includes a communication interface unit 210, a storage unit 220, and a controller 230.

The communication interface unit 210 communicates with the client apparatus 100 of FIG. 1. The communication interface unit 210 provides contents, which have been stored, or contents which have been received from an external data server (not shown), according to a request of the client apparatus 100. Here, the contents may be VoD contents.

The storage unit 220 may store watching environment information corresponding to various types of VoD contents. However, if the VoD contents are received from the external data server, as described above, watching environment information corresponding to VoD contents may also be received from the external data server. Here, the watching environment information may be realized in a metadata format.

In detail, the storage unit 220 may store watching environment information, which has been provided from at least one of a contents producer, a contents service provider, and a contents player maker, with respect to each VoD content. The storage unit 220 may update and store stored watching environment information periodically or frequently according to a request of a provider.

The storage unit 220 may store watching environment information, which has been provided from at least one of a contents producer, a contents service provider, and a contents player maker, with respect to each of VoD contents, according to types and makers of watching apparatuses. For example, the storage unit 220 may store watching environment information provided if a watching apparatus is a TV and watching environment information provided if the watching apparatus is a smart phone.

The storage unit 220 may classify and store selected watching environment information of each of the VoD contents according to users, e.g., according to regions, ages, and genders.

The storage unit 220 may store watching environment information according to selection preferences for types and genres of contents. Therefore, if watching environment information is not provided for particular contents, appropriate watching environment information may be provided in consideration of types and genres of contents.

The controller 230 controls an overall operation of the contents providing server 200.

In detail, if a service request for particular contents is made from the client apparatus 100, the controller 230 may control to add pre-stored contents play information to the corresponding contents and transmit the contents to which the pre-stored contents play information has been added. In this case, the service request may be a request for a download service or a streaming service.

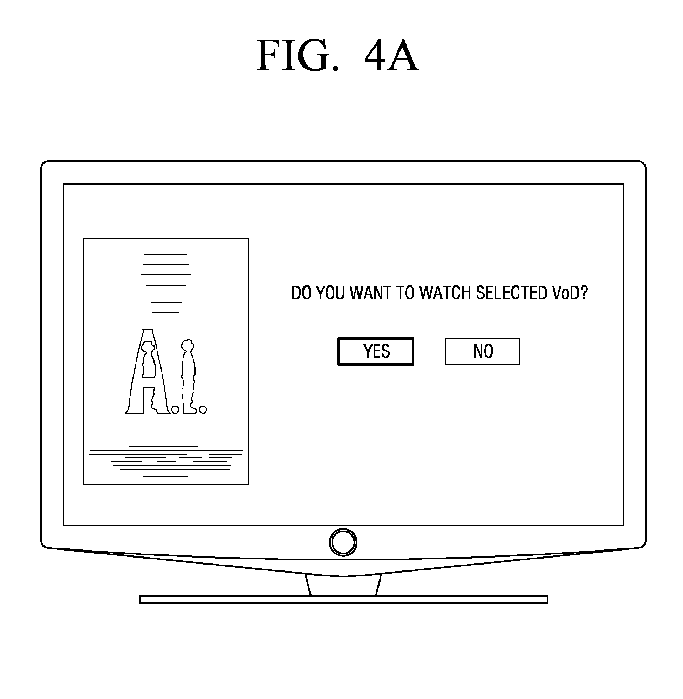

FIGS. 4A through 4D are views illustrating a UI screen according to an exemplary embodiment.

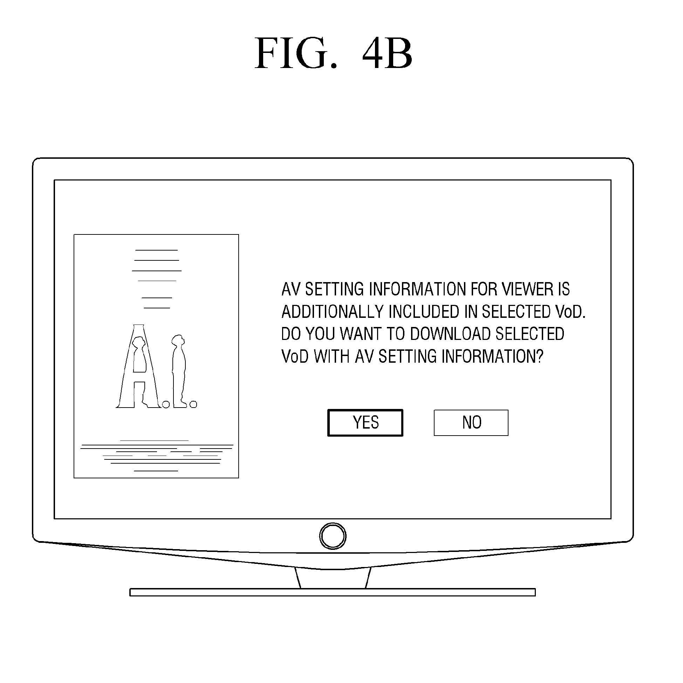

As shown in FIG. 4A, if a user wants to select and watch VoD contents through a UI screen and watching environment information, i.e., AV setting information, is added to the selected VoD contents, the UI screen may be displayed (as shown in FIG. 4B).

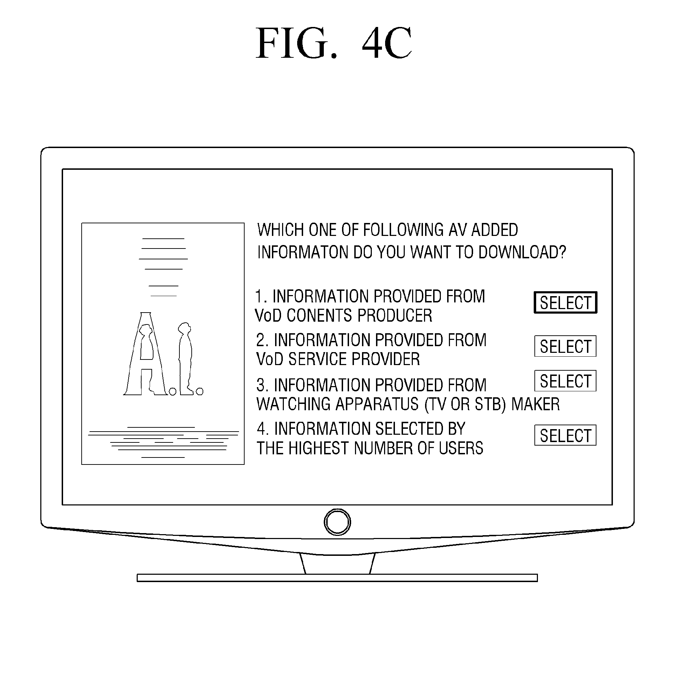

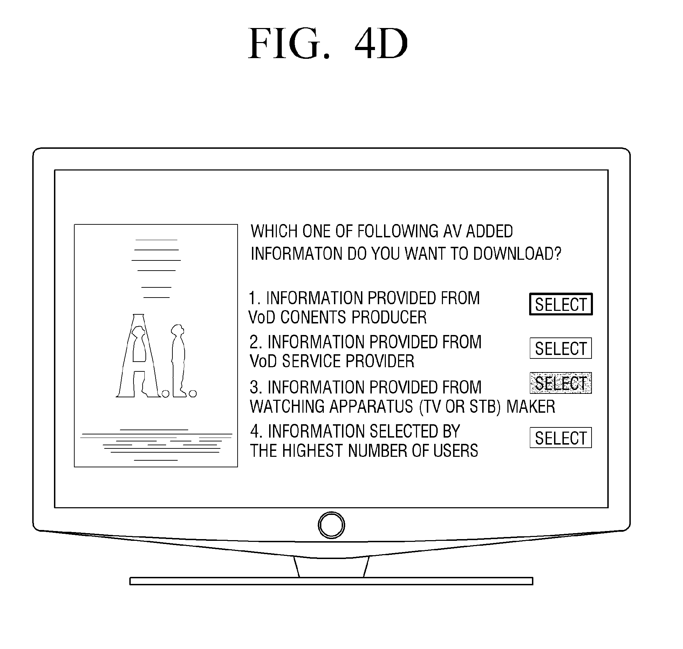

If the user selects an added information download on the UI screen shown in FIG. 4B, an AV added information list, which is providable from a server, may be displayed to be selected by the user (as shown in FIG. 4C). In this case, the AV added information list displayed on the UI screen may be generated in real time or may be pre-stored. Therefore, a selection button of a list which is not providable from the server, may be inactivated and displayed (as shown in FIG. 4D).

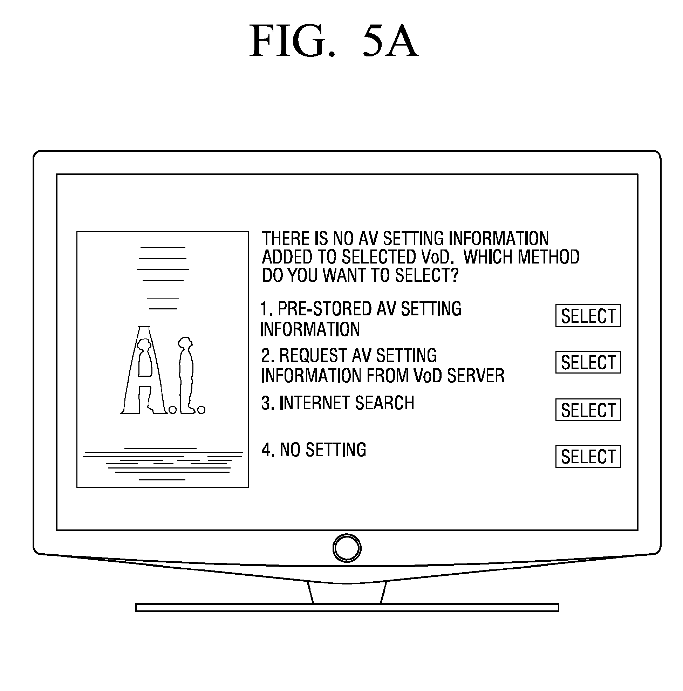

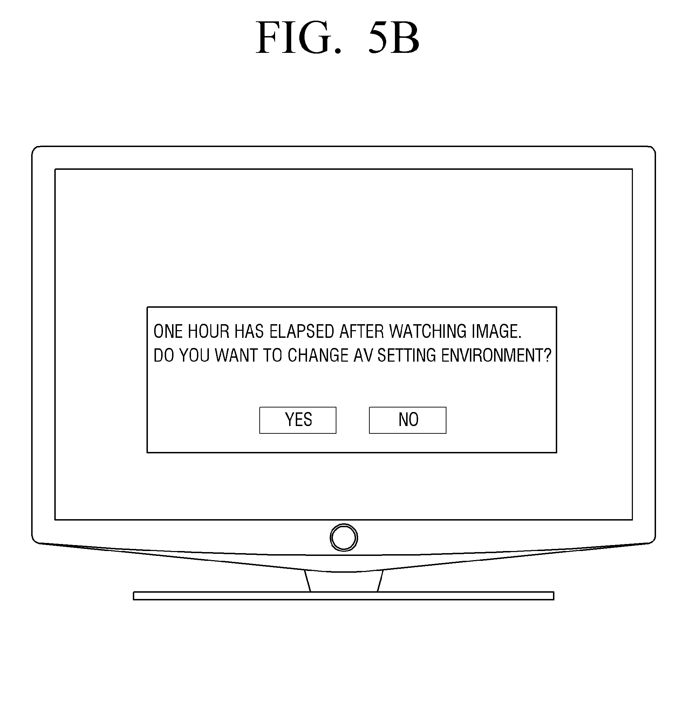

FIGS. 5A and 5B are views illustrating UI screens according to various exemplary embodiments.

FIG. 5A is a view illustrating a UI screen, which is provided if the AV setting information is not added to VoD contents selected by a user.

As shown in FIG. 5A, if the AV setting information is not added to the VoD contents selected by the user, a UI screen for selecting pre-set AV setting information may be provided.

In detail, the UI screen may include an item to select AV setting information pre-stored in a set, an item to request AV setting information from a VoD server (or another server), an item through which AV setting information is not additionally selected, etc.

FIG. 5B is a view illustrating a UI screen to inquire about a change of an AV setting environment, when after watching contents, a pre-set time elapses.

If the pre-set time elapses after watching contents, the user may be asked about whether to change the AV setting environment. If the user selects the change of the AV setting environment, the UI screen as shown in FIG. 4D or 5A may be re-displayed.

The structures of the UI screens shown in FIGS. 4A through 4D and FIGS. 5A and 5B are only exemplary embodiments, and various types of UI screens may be provided according to various exemplary embodiments.

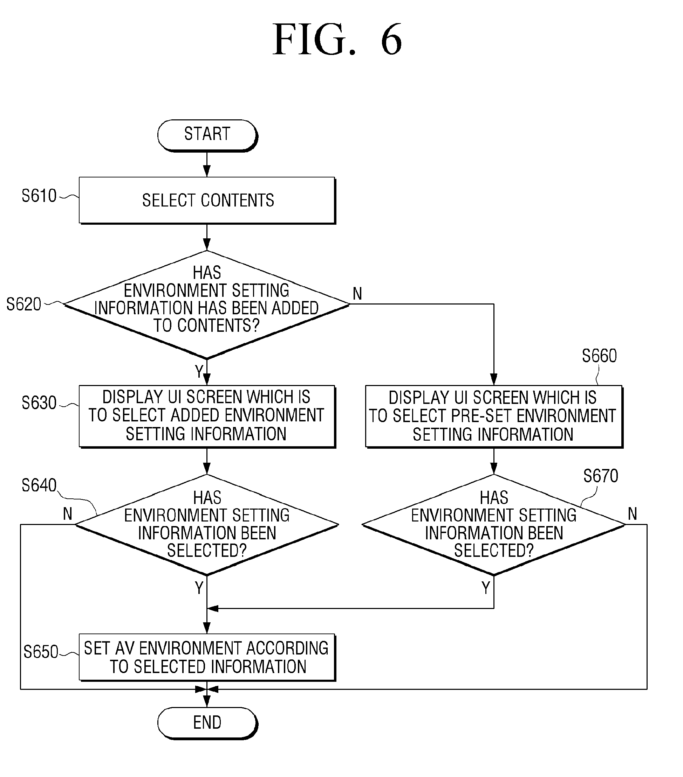

FIG. 6 is a flowchart illustrating a method of setting a contents play environment according to an exemplary embodiment.

Referring to FIG. 6, in operation S610, a user selects contents that the user wants to watch. In operation S620, a determination is made as to whether environment setting information has been added to the contents. Here, the contents may be VoD contents, but are not limited thereto. The contents may include broadcast contents, Internet contents, etc. The environment setting information added to the contents may be provided, as data separate from the contents, but may be provided as one piece of data added to the contents.

If it is determined in operation S620 that the environment setting information has been added to the contents, a UI screen selects the added environment setting information displayed in operation S630.

In operation 640, if the environment setting information is selected through the UI screen displayed in operation S630, an AV environment is set according to the selected environment setting information in operation S650. Here, the environment setting information may include screen setting information and sound setting information.

If it is determined in operation S620 that the environment setting information has not been added to the contents, a UI screen for selecting pre-set environment setting information is displayed in operation S660. Here, the pre-set environment setting information may be AV setting information pre-stored in a set, AV setting information requested from a server which has provided contents (or another server), or AV setting information provided through an Internet search.

In operation 670, if environment setting information is selected through the UI screen provided in operation S660, an AV environment is set according to the selected environment setting information in operation S650.

Contents may be played without setting the AV environment. In other words, corresponding contents may be played in a state of maintaining existing AV setting.

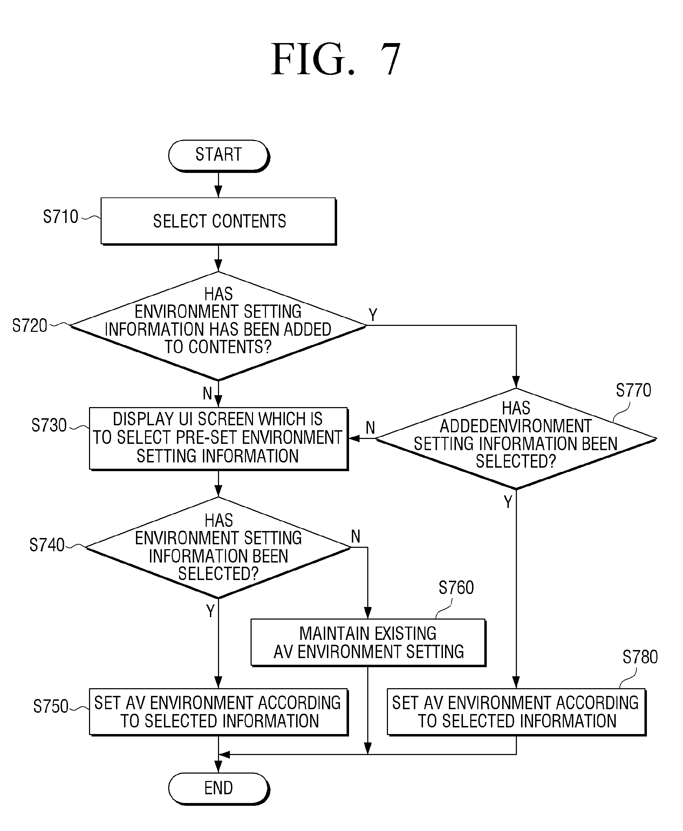

According to an aspect of the exemplary embodiment, if the environment setting information is not selected in operation S640, the UI screen to select the pre-set environment setting information may be displayed according to a selection of the user in operation S660. This will be described with reference to FIG. 7.

FIG. 7 is a flowchart illustrating a method of setting a contents play environment according to another exemplary embodiment.

Referring to FIG. 7, in operation S710, contents that a user wants to watch are selected. In operation S720, a determination is made as to whether environment setting information has been added to the contents. Here, the contents may be VoD contents but are limited thereto. Therefore, the contents may include broadcast contents, Internet contents, etc.

If it is determined in operation S720 that the environment setting information has not been added to the contents, a UI screen to select pre-set environment setting information is displayed in operation S730. Here, the pre-set environment setting information may be AV setting information pre-stored in a set, AV setting information requested from a server which has provided contents (or another server), AV setting information providable through an Internet search, etc.

In operation 740, if environment setting information is selected through the UI screen provided in operation S730, an AV environment is set according to the selected environment setting information in operation S750.

In operation 740, if the environment setting information is not selected through the UI screen provided in operation S730, existing AV environment setting is maintained in operation S760.

If the environment setting information has been added to the contents and has been selected in operation S770, an AV environment is set according to the selected environment setting information in operation S780.

If the added environment setting information has not been selected in operation S770, the UI screen selects the pre-set environment information to be displayed in operation S730. Operations 740, 750, and 760 may be performed as described above.

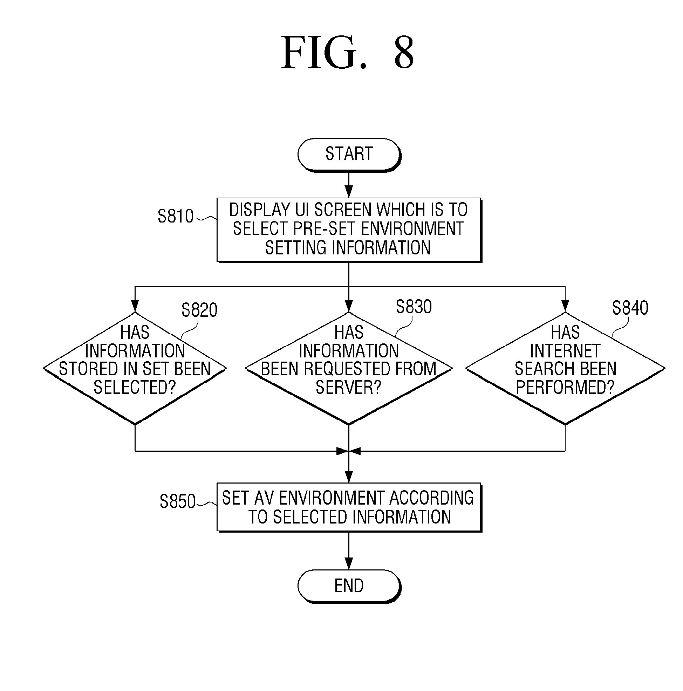

FIG. 8 is a view illustrating operation S740 of FIG. 7 in detail.

Referring to FIG. 8, in operation S810, a UI screen selects pre-set environment information displayed. In operation S820, information pre-stored in a set is selected according to a selection of a user. In operation S830, information is requested from a server which has provided contents or another server. In operation S840, environment setting information is selected through an Internet search.

In operation S850, an AV environment is set according to information selected in one of operations S820, S830, and S840.

In a system including a server and a client apparatus according to embodiments, the server receives a request for providing contents selected by a user from the client apparatus. The server provides the selected contents to the client apparatus according to the request.

In this case, the client apparatus provides a UI screen selects watching environment information of the selected contents. If the server provides watching environment information corresponding to the selected contents, the client apparatus provides the provided watching environment information to the UI screen. If the server does not provide the watching environment information corresponding to the selected contents, the client apparatus provides pre-set watching environment information to the UI screen and sets a watching environment according to the watching environment information selected through the UI screen.

Therefore, a user is provided with VoD contents along with an optimized watching environment information. Thus, when watching VoD contents, the user experiences an optimized watching quality.

Also, a service provider may provide additional information.

Embodiments can also be embodied as computer readable code on a computer readable recording medium. The computer readable recording medium is any data storage device that can store data, which can thereafter be read by a computer system. Examples of the computer readable recording medium include read-only memory (ROM), random-access memory (RAM), CD-ROMs, magnetic tapes, floppy disks, optical data storage devices, and carrier waves. The computer readable recording medium can also be distributed over network coupled computer systems, so that the computer readable code is stored and executed in a distributed fashion.

The foregoing exemplary embodiments are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method of controlling a client apparatus which plays contents, the method comprising:
receiving a user command which is to select contents;
providing a user interface (UI) screen which is to select a watching environment information of the contents selected according to the user command; and
setting a watching environment according to the watching environment information selected through the UI screen.

2. The method of claim 1, wherein the providing of the UI screen comprises: if watching environment information is added to the selected contents, providing a UI screen which is to select watching environment information added to the contents.

3. The method of claim 2, wherein the watching environment information added to the selected contents is information which is provided from at least one of a contents producer, a contents service provider, and a contents player maker.

4. The method of claim 2, wherein the watching environment information is added to the selected contents in a metadata format or is provided as data separate from the contents.

5. The method of claim 1, wherein the providing of the UI screen comprises providing the UI screen, which is to select pre-set watching environment information, to the client apparatus.

6. The method of claim 5, wherein the pre-set watching environment information is at least one of pre-stored watching environment information, watching environment information requested from an external server or another server, and watching environment information provided through an Internet search.

7. The method of claim 6, wherein the pre-stored watching environment information is information which is pre-set according to at least one of a type and a genre of contents.

8. A client apparatus comprising:
a UI unit which receives a user command which is to select contents;
a controller which determines whether watching environment information has been added to the selected contents; and
a UI processor which generates a UI screen which is to select a watching environment information of the contents,
wherein the controller sets a watching environment according to watching environment information selected through the UI screen.

9. The client apparatus of claim 8, wherein if the watching environment information has been added to the selected contents, the controller provides the UI screen which is to select the watching environment information added to the selected contents.

10. The client apparatus of claim 9, wherein the watching environment information added to the selected contents is information which is provided from at least one of a contents producer, a contents service provider, and a contents player maker.

11. The client apparatus of claim 9, wherein the watching environment information is added to the selected contents is added to the contents to be provided in a metadata format or is provided as data separate from the contents.

12. The client apparatus of claim 8, wherein if the watching environment information is not added to the contents, the controller provides the UI screen which is to select pre-set watching environment information.

13. The client apparatus of claim 8, wherein the pre-set watching environment information is at least one of pre-stored watching environment information, watching environment information requested from an external server or another server, and watching environment information provided through an Internet search.

14. The client apparatus of claim 13, wherein the pre-stored watching environment information is information which is pre-set according to at least one of a type and a genre of contents.

15. A system comprising:
a server which, if a request for providing contents selected by a user is received from a client apparatus, provides the contents selected according to the request to the client apparatus: and
the client apparatus which provides a UI screen which is to select a watching environment information of the selected contents, if the server provides the watching environment information corresponding to the selected contents, provides the provided watching environment information to the UI screen, if the server does not provide the watching environment information corresponding to the selected contents, provides pre-set watching environment information to the UI screen, and sets a watching environment according to the watching environment information selected through the UI screen.
